(19) Europäisches Patentamt
European Patent Office
Office européen des brevets

(11) **EP 1 758 107 A2**

(12) **EUROPEAN PATENT APPLICATION**

(43) Date of publication:
**28.02.2007 Bulletin 2007/09**

(51) Int Cl.:
**G11B 7/135** (2006.01)  **G11B 7/13** (2006.01)
**G11B 7/09** (2006.01)  G11B 7/09 (2006.01)

(21) Application number: **06117114.6**

(22) Date of filing: **13.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **29.07.2005 JP 2005221947**

(71) Applicant: **KABUSHIKI KAISHA TOSHIBA**
**Tokyo 105-8001 (JP)**

(72) Inventors:
• **Iwata, Katsuo,**
**Toshiba Corp.**
**Tokyo 105-8001 (JP)**
• **Nagata, Kazuhiro,**
**Toshiba Corp.**
**Tokyo**
**105-8001 (JP)**

(74) Representative: **Henkel, Feiler & Hänzel**
**Patentanwälte**
**Maximiliansplatz 21**
**80333 München (DE)**

(54) **Optical head and information recording/reproducing apparatus**

(57)    By using one embodiment of an invention, a diffraction pattern of a diffraction element or hologram polarization element (24) to guide a reflected laser beam divided into a predetermined number is suitably combined as one body in a photodetector (26), and an optical head unit (11) is easily designed to obtain a focus error signal, a track error signal, a correction track error signal (in a system with a lens shift), and a reproducing signal (RF) from a laser beam reflected on an optical disc. Therefore, when reproducing information from a recording medium of optional standard, it is possible to provide an optical head unit and optical disc apparatus which provides a stable reproducing signal regardless of the standards of recording media.

FIG. 1

**Description**

One embodiment of the invention relates to an optical disc apparatus which records or reproduces information in/from an optical disc or an optical information recording medium, and an optical head unit incorporated in the optical disc apparatus.

A long time has been passed since the commercialization of an optical disc capable of recording or playing back information in a noncontact manner by using a laser beam, and an optical disc apparatus (an optical disc drive) which is capable of recording and reproducing information in/from an optical disc (a recording medium). Optical discs with several kinds of recording density called CD and DVD have become popular.

Recently, an ultra-high density optical disc (High Density Digital Versatile Disc, hereinafter called a HD DVD) using a laser beam with a blue or blue-purple wavelength to record information to increase the recording density, has been put to practical use.

An optical disc apparatus includes a light transmitting system to radiate a laser beam with a fixed wavelength to a specified position on an optical disc (a recording medium), a light receiving system to detect a laser beam reflected on an optical disc, a mechanism control (servo) system to control the operations of the light transmitting system and light receiving system, and a signal processing system which supplies recording information and an erase signal to the light transmitting system, and reproduces recorded information from a signal detected by the light receiving system. Compactness and light-weight are demanded for an optical head integrated with the light transmitting system, light receiving system and servo system.

DVD and HD DVD optical discs are different in the pitch of a guide groove, a track, or a line of record mark in the radial direction of a disc. Thus, in the track error control to align a condensed laser beam condensed entered through an object lens with the center of the track or the line of record mark, a method of dividing into a necessary number by diffracting a reflected laser beam from an optical disc by a diffraction element is widely used for detection of focus error and tracking error using a diffraction grating.

For example, Japanese Patent Application Publication (KOKAI) No. 2002-100063 describes a method of decreasing the influence of a tracking offset included in the light divided into several rays by a diffraction grating, when dividing a diffraction grating into fine areas and detecting a focus error.

However, the method described in the above Publication closely combines two kinds of diffraction elements with different diffraction angle, and makes the amount of the 2-divided light substantially the same. The divided area of the diffraction element corresponds to the light-receiving area of the photodetector, just like a pair.

Therefore, it is difficult to obtain a signal from a different area or across areas in focus/tracking, arising a problem that an output signal is likely buried in noises

An object of the invention is to provide an optical disc apparatus which records or reproduces information in/ from an optical disc or an optical information recording medium, when reproducing information from a recording medium of optional standard, it is possible to provide an optical head unit and optical disc apparatus which provides a stable reproducing signal regardless of the standards of recording media.

According to an aspect of the invention, there is provided an optical head unit comprising:

a diffraction element which has a first diffraction area given belt-like or comb-like patterns or a predetermined arrangement pattern to diffract light in a first direction group, and a second diffraction area given belt-like or comb-like patterns or a predetermined arrangement pattern to diffract light in a second direction group different from the first direction group, each of the first and second diffraction areas including finely divided areas to diffract the light in a predetermined direction within its direction group; and
a photodetector which receives the light diffracted by the finely divided areas of each of the first and second diffraction areas of the diffraction element, and outputs a signal corresponding to the intensity of the light.

This summary of the invention does not necessarily describe all necessary features so that the invention may also be a sub-combination of these described features.

The invention can be more fully understood from the following detailed description when taken in conjunction with the accompanying drawings, in which:

FIG. 1 is an exemplary diagram showing an example of an optical disc apparatus in accordance with an embodiment of the invention.
FIGS. 2A and 2B are exemplary diagrams showing an example of image forming by a diffraction element and a light-receiving cell of a photodetector in an optical head of the optical disc apparatus shown in FIG. 1, according to an embodiment of the invention;
FIG. 3 is an exemplary diagram showing an example of a method of defining a diffraction pattern (boundary) of a diffraction element in an optical head of the optical disc apparatus shown in FIGS. 2A and 2B, according to an embodiment of the invention;

FIGS. 4A to 4C are exemplary diagrams showing a relation between wavefront splitting by an optical diffraction element and a detection area of a photodetector in the optical head shown in FIGS. 2A and 2B, according to an embodiment of the invention;

FIGS. 5A to 5C are exemplary diagrams showing a relation between wavefront splitting by an optical diffraction element and a detection area of a photodetector in the optical head shown in FIGS. 2A and 2B, according to an embodiment of the invention;

FIGS. 6A to 6C are exemplary diagrams showing a relation between wavefront splitting by an optical diffraction element and a detection area of a photodetector in the optical head shown in FIGS. 5A to 5C, according to an embodiment of the invention;

FIGS. 7A to 7C are exemplary diagrams showing a relation between wavefront splitting by an optical diffraction element and a detection area of a photodetector in the optical head shown in FIGS. 2A and 2B, FIGS. 5A to 5C and FIGS. 6A to 6C, according to an embodiment of the invention; and

FIGS. 8A to 8C are exemplary diagrams showing a relation between wavefront splitting by an optical diffraction element and a detection area of a photodetector in the optical head shown in one of FIGS. 2A and 2B, FIGS. 5A to 5C, and FIGS. 6A to 6C according to an embodiment of the invention.

An embodiment of the invention will be explained in detail hereinafter with reference to the accompanying drawings. A digital camera apparatus having a large capacity hard disc unit is taken as an example of embodiment.

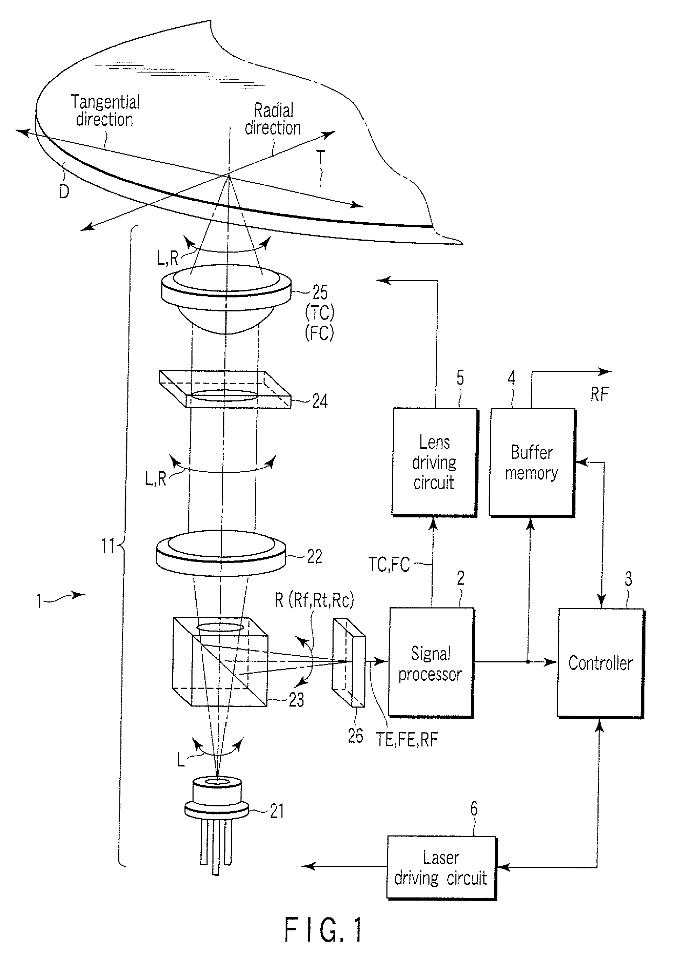

FIG. 1 shows an example of an information recording/reproducing apparatus (an optical disc apparatus) according to an embodiment of the invention.

An optical disc apparatus 1 shown in FIG. 1 includes an optical pickup (optical head unit) 11, which can record information in a not-shown recording layer (organic film, metallic film or phase changing film) of a recording medium (optical disc) D, read information from the recording layer, or erase information recorded in the recording layer. In addition to the optical head unit 11, the optical disc unit 1 has a not-shown head moving mechanism which moves the optical head unit 11 along the recording surface of the optical disc D, and a disc motor (not shown) which rotates the optical disc D at a predetermined speed. These mechanical elements will not be described in detail. The optical disc unit 1 also includes a signal processor to process the output of a photodetector incorporated in the optical head unit 11, and a controller to control the mechanical elements of the optical head unit 11.

The optical head unit 11 includes a light source, which is a laser diode (LD) 21 or a semiconductor laser element. The wavelength of a laser beam emitted from the LD (light source) 21 is 400 to 410nm, preferably 405 nm.

A laser beam from the LD (light source) 21 is collimated (paralleled) by a collimator lens (CL) 22, given a predetermined convergence by a condensing element or an object lens (OL) 25, and condensed on the recording layer of the recording surface of the optical disc D. The recording layer has a guide groove, a track or a line of record mark (recorded data) formed concentrically or spirally at a pitch of 0.34 $\mu$m - 1.6 $\mu$m. The object lens 25 is made of plastic, and has a numerical aperture NA of 0.65.

A laser beam from the LD 21 is transmitted through a polarization beam splitter (PBS) 23 before collimated by the collimator lens 22, and transmitted through a hologram diffraction element (HOE) 24 or a wavefront splitting element before applied to the object lens 25. The hologram diffraction element (HOE) 24 has the thickness to function as a known $\lambda$/4 plate.

After passing through the HOE (wavefront splitting element) 24 and given a predetermined convergence by the object lens 25, the laser beam is condensed on the recording layer (or a nearby area) of the optical disc D. (The laser beam provides a minimum optical spot at a fixed focal position of the object lens 25.)

The object lens 25 (optical head unit 11) includes a driving coil and a magnet. The object lens is placed by a not-shown object lens driving mechanism at a predetermined position in the track direction crossing the track (record mark line) T of the optical disc D, and at a predetermined position in the focus direction (indicated by the arrow F) or the recording layer thickness direction. Moving the object lens 25 in the track direction and controlling the position of the object lens 25 to adjust the minimum optical spot of the laser beam to the center of the track (record mark line) are called a tracking control. Moving the object lens 25 in the focus direction and controlling the position of the object lens 25 to make the distance between the recording layer and object lens 25 identical to the focal distance of the lens 25 are called a focus control.

The laser beam reflected on the recording surface of the optical disc D is captured by the object lens 25, converted to a beam with a substantially parallel cross section, and returned to the HOE 24.

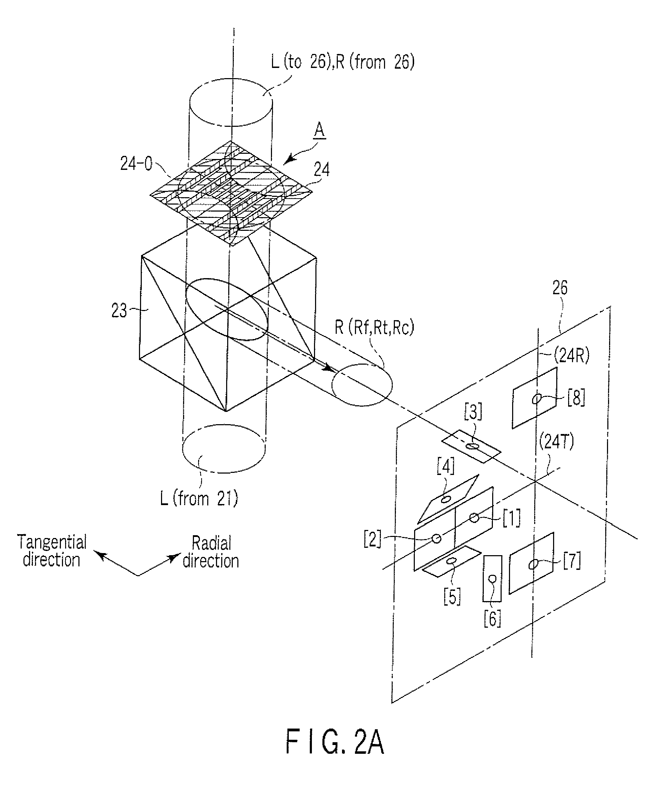

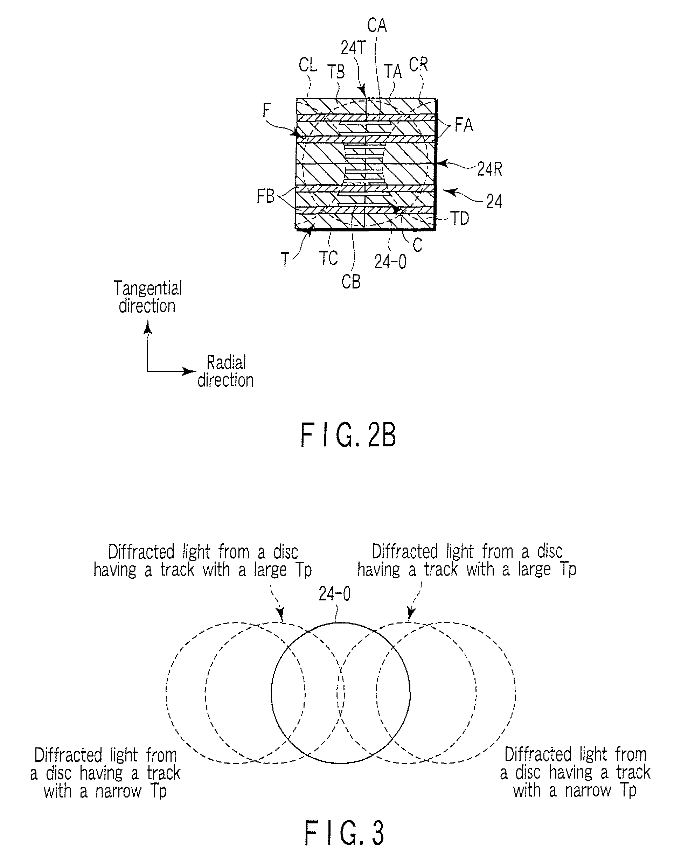

The HOE 24 consists of three coarsely divided areas F, T and C, which will be explained later with reference to FIGS. 2A and 2B. Each divided area consists of finely divided areas (F: FA, FB, T: TA, TB, TC, TD, C: CA, CB) for diffracting the reflected laser beam at a predetermined angle to the direction of extending the track T when the track T is projected, or a tangential direction (hereinafter called a Tan direction).

The coarsely divided area F is used to detect a displacement in the focus direction, or a focus error signal. The coarsely divided area T is used to detect a displacement in the track direction, or a track error signal. The coarsely divided area C is used to detect a signal to correct a track offset when the object lens is moved in the radial direction during the track control.

A RF signal is detected from all finely divided areas (F: FA, FB, T: TA, TB, TC, TD, C: CA, CB) or some of the finely divided areas.

The above three coarsely divided areas of the HOE 24 have the following advantages, in other words.

A) The divided diffraction areas of HOE are further divided into smaller grating-like or comb-like areas.

B) Dividing the divided diffraction areas into multiple areas enables control of the diffraction directions of multiple +1st diffracted light, control of the position of the light-receiving area on the photodetector, and reduction of the number of light-receiving areas.

C) Multi-divided cells (grating-like)/line (comb-like) structure eliminating the necessity of a binary diffraction element used for $\pm$1st diffracted light can realize substantially the same effects, and control the diffracting direction/diffraction efficiency.

D) The area of the disc reflected beam is unnecessary to be divided into FE/TE, and the design flexibility is increased. This eliminates the dependence on the FE/TE areas determined by the kinds of disc, and facilitates configuration of a compatible optical head.

E) Diffraction is possible over areas.

F) The FE/TE efficiency can be controlled by controlling the area width.

The HOE 24 functions also as a $\lambda/4$ plate as described above, and the direction on the plane of polarization of the reflected laser beam diffracted (wavefront split) by the HOE 24 and guided to the PBS (polarization beam splitter) 23 is turned 90° compared with the laser beam applied from the LD 21 to the PBS 23.

The reflected laser beam returned to the polarization beam splitter 23 is turned 90° from the polarizing direction of the laser beam emitted from the LD 21 to the optical disc D, and reflected on the plane of polarization (not described in detail) of the PBS 23.

The laser beam reflected by the polarization beam splitter 23 forms an image on the light-receiving plane of the photodiode (photodetector) 26 set at a predetermined position depending on the focal distance of the collimator lens 22.

The reflected laser beam is divided into a predetermined number and shape to meet the arrangement and shape of a detection area (light-receiving area) given previously to the light-receiving plane of the photodetector 26, when passing through the HOE 24 as described above.

The current output from the photodetector 26 is converted to a voltage by a not-shown I/V amplifier, and output from the signal processor 2 as an RF (reproducing) signal, a focus error signal FE and a tracking error signal. The RF signal is converted to a predetermined signal format by the controller 3 (or a not-shown data processor), and output to a temporary storage unit, an external storage unit or an information displaying/reproducing unit (personal computer or monitor), through the buffer 4.

Among the output from the signal processor 2, the focus error signal FE and track error signal TE concerning the position of the object lens 25 are converted to a focus control signal FC and a tracking control signal TC for correcting the position of the object lens 25, and supplied to a not-shown focus coil and track coil through a lens driving circuit 5.

The focus error signal FE is used to set the control amount of the focus control signal FC for moving the object lens 25 in the focus (optical axis) direction orthogonal to the plane including the recording layer of the optical disc D, so that the distance between the object lens 25 and the recording layer of the optical disc D becomes identical to the focal distance of the object lens 25.

The track error signal TE is used to set the control amount of the track control signal TC for moving the object lens 25 in the direction (Rad direction) orthogonal to the direction of extending the track (record mark) T of the recording layer.

A knife-edge method is assumed as a focus error detection method in this example. Other known methods may be used. As a track error detection method, Differential Phase Detection (DPD) and Push Pull (PP) are assumed. In a HD DVD disc, a track pitch is narrow, and an influence of lens shit of the object lens 25 should be taken into consideration. Therefore, Compensated Push Pull (CPP, compensated track error detection method) may be used to detect a track error.

Among the output of the signal processor 2, a laser drive signal defined corresponding to a signal concerning the intensity of the light emitted from the LD (Laser Diode) 21 is supplied to the LD 21 through a laser driving circuit 6. On the laser drive signal, the recording data entered through the controller 3 (or a not-shown data controller) or the largeness of the drive currents corresponding to reproducing or erasing are sequentially superposed.

Namely, the object lens 25 is controlled, so that an optical spot condensed in a minimum spot diameter can be condensed on the recording layer at the focal distance, at substantially the center of the track or record mark line T formed on a not-shown recording layer of the optical disc D.

More specifically, the laser beam L emitted from the semiconductor laser (LD) 21 is collimated by the collimator lens 22. The laser beam L is a linearly polarized light, changed (turned) to a circularly polarized light in the plane of polarization when passing through the PBS (polarized beam splitter) 23 and hologram (HOE) 24, given a predetermined convergence when passing through the object lens 25, and condensed on the recording surface (recording layer) of the optical disc D.

The laser beam L condensed on the recording layer of the optical disc D is optically modulated (reflected or diffracted) by the record mark (pit line) formed on the recording surface, or a groove formed previously on the recording surface of the optical disc.

The reflected laser beam R reflected or diffracted on the recording layer of the optical disc D is captured by the object lens 25, paralleled again when radiating, and changed 90° by the HOE 24 in the polarizing direction compared with a going path.

The reflected laser beam R returned to the HOE 24 is divided into luminous fluxes by the finely divided areas (F: FA, FB, T: TA, TB, TC, TD, C: CA, CB) given to the HOE 24, and deflected in a predetermined direction. A diffraction pattern given to the HOE 24 is a polarized hologram defined to act only on the reflected laser beam R changed 90° in the polarizing direction, compared with a going path. The diffracting direction of the finely divided areas (F: FA, FB, T: TA, TB, TC, TD, C: CA, CB) may be a pattern capable of providing light diffracted only in one optional direction (+1 $^{st}$ diffracted light), for example, a blazed pattern.

The reflected laser beam applied to the HOE 24 is returned to the collimator lens 22 as a group of two laser beams Rf for a focus error signal diffracted by the finely divided areas FA and FB, four laser beams Rt for a track error signal diffracted by the finely divided areas TA, TB, TC and TD, and two laser beams Rc for a track error correction signal diffracted by the finely divided areas CA and CB. The reflected laser beam returned to the collimator lens is given a specific convergence, and guided to the plane of polarization of the PBS 23.

The reflected laser beams Rf, Rt and Rc reflected (wavefront split into luminous fluxes) on the plane of polarization of PBS 23 are condensed in each (corresponding) light-receiving area of the light-receiving plane of the photodetector 26, according to the luminance given by the collimator lens 22.

FIGS. 2A and 2B show the relation between the reflected laser beam divided by a hologram diffraction element of the optical head unit shown in FIG. 1 and the light-receiving area of the light-receiving plane of a photodetector.

As already explained, the hologram diffraction element (HOE) 24 divides the laser beam reflected on the recording layer of the optical disc D into two laser beams Rf for a focus error, four laser beams Rt for a track error, and two laser beams Rc for a track error correction signal, and diffracts them in a predetermined direction.

The HOE 24 is divided into two or four by a cross-shaped dividing line (24T and 24R) having an intersection at a portion substantially identical to the center of the cross section of the optical spot of the reflected laser beam R.

More specifically, the coarsely divided area F given to the HOE 24 is a pattern defined parallel to the dividing line 24R. The coarsely divided area F is composed of the finely divided areas FA and FB consisting of belt-like slender areas arranged at a predetermined interval, and divided into two areas FA and FB taking the dividing line 24R as a boundary.

The coarsely divided area T given to the HOE 24 is a pattern defined by areas except the coarsely divided areas C and F. The coarsely divided area T is divided into four areas TA, TB, TC and TD taking the division lines 24T and 24R as a boundary.

Among the coarsely divided areas, the area F is used to generate a focus error signal FE, the area T is used to generate a track error signal TE (DPD)/(PP), and the area C is used to generate a track error correction signal TE (CPP) to eliminate an influence of offset in the system including the influence of the offset of the object lens 25.

The arc-shaped dividing lines CR and CL are the boundary of the coarsely divided areas C and T, assuming detection of a reflected laser beam from an optical disc with a fixed pitch defined by the standard of that disc, or two or more optional optical disks with different pitches of a track or a recording mark line. Assuming that a spot of a reflected laser beam reaching the HOE 24 is 24-0, either a diffracted light ($\pm$1$^{st}$) of a laser beam from a disc having a wide track pitch Tp or a diffracted light ($\pm$1$^{st}$) of a laser beam from a disc having a narrow track pitch Tp includes an area overlapping the spot 24-0.

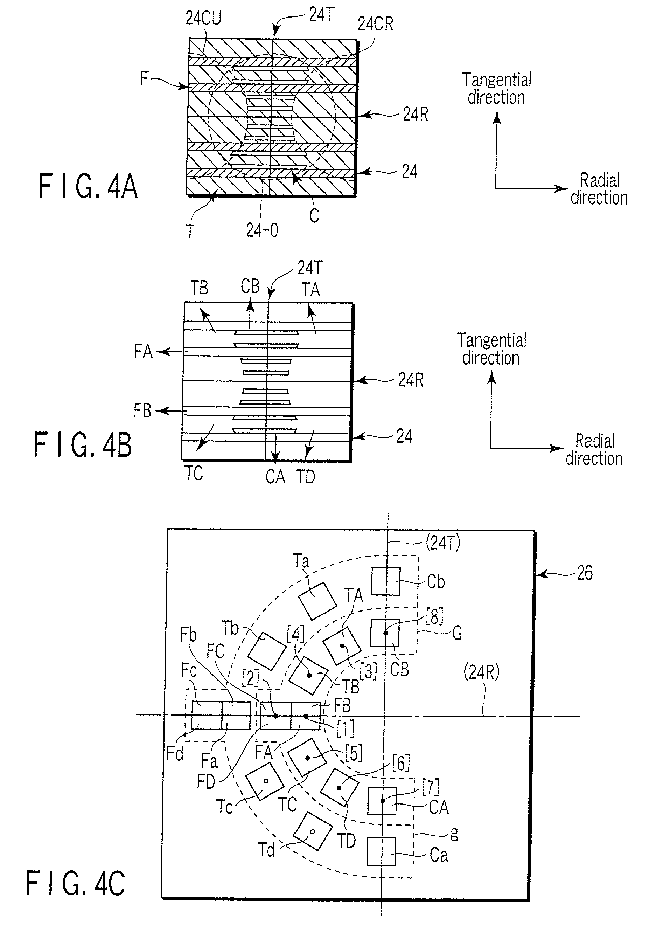

As a pattern of light-receiving cells of the photodetector 26 corresponding to two laser beams Rf for a focus error, two light-receiving cells are placed adjacently on both sides of the dividing line 24R of the HOE 24 in the state the dividing line 24 is projected, as shown in FIG. 4C. The light-receiving cells receive a component diffracted by the area FA (a reflected laser beam Rf) and a component diffracted by the area FB (a reflected laser beam Rf).

The pattern of light-receiving cells of the photodetector 26 corresponding to four laser beams Rt for a track error is defined at four positions not overlapped with the cells prepared for detection of a focus error, so that the components divided (diffracted) by the four areas of the HOE 24 can be independently detected, as shown in FIG. 4C. The positions of the light-receiving cells (for example, the intersection of the dividing lines 24R and 24T of the HOE 24 is projected, and that intersection is regarded as a center) and the distance from the center are defined according to the pattern of the HOE 24 as already explained.

The pattern of light-receiving cells of the photodetector 26 corresponding to two laser beams Rc for a track error correction signal is defined at two positions (at least) not overlapped with the cells prepared for detection of a focus error and cells prepared for detection of a track error, so that the components divided (diffracted) by the dividing line 24T of the HOE 24 can be independently detected, as shown in FIG. 4C. The positions of the light-receiving cells and the distance from the center in the state the intersection of the dividing lines 24R and 24T of the HOE 24 is projected and the intersection is regarded as a center, are defined according to the pattern of the HOE 24 as already explained.

Among the reflected laser beam, the laser beam for the RF signal is diffracted by an optional (or all) diffraction pattern of the HOE 24, and converted to a signal by a predetermined corresponding light-receiving cell. Therefore, the RF signal can be obtained by adding the outputs of optional light-receiving cells of the photodetector 26.

FIG. 4A to FIG. 4C show the HOE pattern and the arrangement of cells of the photodetector extracted from FIG. 2A and FIG. 2B. In FIG. 4A to FIG. 4C, the components similar to those of the HOE 24 displayed in FIG. 2B (magnified part A) are given similar reference numerals, and a part of detailed explanation will be omitted. In FIG. 4C, the group 1 (G, displayed in uppercase) and group 2 (g, displayed in lowercase) divided by a broken line are correlated when detecting a reflected laser beam from optional two optical discs with two pitches if the pitches of a track or a record mark line T peculiar to each optical disc are different. The pitch of a track or a recording mark line T is 0.68 $\mu$m in a current DVD standard optical disc, and 0.4 $\mu$m in a HD DVD standard optical disc.

FIG. 4A shows an example of a diffraction pattern given to the hologram diffraction element (HOE) 24. FIG. 4B schematically shows the direction of deflecting the reflected laser beams Rf, Rt and Rc by the diffraction pattern shown in FIG. 4A. FIG. 4C shows the arrangement of light-receiving cells of a photodetector to generate a focus error signal (FE), track error signal (TE) and compensated track error signals (CPP) from the reflected laser beams diffracted (wavefront split) by the HOE shown in FIG. 4A.

As seen from FIG. 4A, the HOE 24 is divided into four by the dividing lines 24R and 24T orthogonal to each other. The HOE 24 is given coarsely divided areas F, T and C like those explained in FIG. 2A and FIG. 2B, extending over four or two areas divided by the dividing lines 24R and 24T.

Therefore, a laser beam is actually divided (wavefront split) into eight as follows.

    Component by the area 24-FA (optical spot) [1]
    Component by the area 24-FB (optical spot) [2]
    Component by the area 24-TA (optical spot) [3]
    Component by the area 24-TB (optical spot) [4]
    Component by the area 24-TC (optical spot) [5]
    Component by the area 24-TD (optical spot) [6]
    Component by the area 24-CA (optical spot) [7]
    Component by the area 24-CB (optical spot) [8]

The optical spots [1] and [2] require two light-receiving cells for one component when the knife-edge method is used as a focus detection method, and the number of light-receiving cells of a photodetector becomes ten.

The relation between the divided area by the HOE 24 and the light-receiving areas (light-receiving cells) of the photodetector 26 is obtained by the equation.

    Component (optical spot) divided by the HOE area 24-FA (optical spot) [1]
    → Photodetector areas [FA], [FB]
    Component (optical spot) divided by the HOE area 24-FB (optical spot) [2]
    → Photodetector areas [FC], [FD]
    Component (optical spot) divided by the HOE area 24-FB (optical spot) [3]
    → :Photodetector area 26-[TA]
    Component (optical spot) divided by the HOE area 24-TB (optical spot) [4]
    → :Photodetector area 26-[TB]
    Component (optical spot) divided by the HOE area 24-TC (optical spot) [5]
    → :Photodetector area 26-[TC]
    Component (optical spot) divided by the HOE area 24-TD (optical spot) [6]
    → :Photodetector area 26-[TD]
    Component (optical spot) divided by the HOE area 24-CA (optical spot) [7]
    → :Photodetector area 26-[CA]
    Component (optical spot) divided by the HOE area 24-CB (optical spot) [8]
    → :Photodetector area 26-[CB]

From FIG. 4C, assuming that the output from the light-receiving cell of the photodetector 26 are p[**] (**: an identifier of a corresponding light-receiving cell), the focus error signal (FE) can be obtained by any one of the equations.

$$FE = p[FA] - p[FB]$$

or

$$FE = p[FB] - p[FA]$$

or

$$FE = p[FC] - p[FD]$$

or

$$FE = p[FD] - p[FC]$$

The outputs as a pair may be added of course.
From FIG. 4C, the track error signal (TE) can be obtained by the equation in the DPD method.

$$TE\ (DPD)\ =$$
$$Ph\ (p[TA] + p[TC]) - ph\ (p[TB] + [TD])$$

or

$$TE\ (DPD)\ =$$
$$Ph\ (p[TB] + p[TD] - ph\ (p\ [TA] + p\ [TC])$$

From FIG. 4C, the track error signal (TE) is obtained by the equation in the PP method.

$$TE\ (PP)\ =\ (p\ [TA] + p\ [TD] - (p[TB] + p[TC]$$

or

$$TE\ (PP)\ =\ (p\ [TB] + p\ [TC] - (p[TA] + p[TD]$$

The compensated push pull (CPP) when the lens shift of an object lens is included, is obtained by

$$TE\ (CPP)\ =\ TE\ (PP)\ -\ K^* \ (p[CA] - p[CB])$$

or

$$TE\ (CPP)\ =\ TE\ (PP)\ -\ K^* \ (p[CB] - p[CA])$$

Where, K is a compensation coefficient obtainable from facts such as LD used, coarsely divided areas T and C, and may be positive or negative.

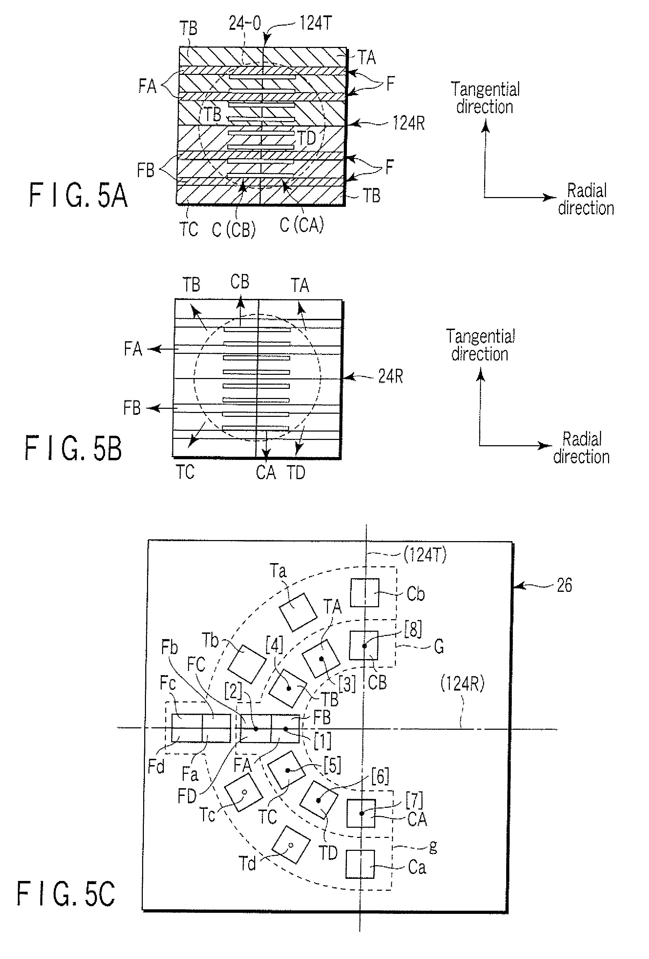

FIG. 5A to FIG. 5C show another embodiment of the areas divided by the HOE and the light-receiving areas (light-receiving cells) of the photodetector explained in FIGS. 2A, 2B and FIGS. 4A to 4C. The similar components as those of the embodiment explained in FIGS. 2A, 2B and FIGS. 4A to 4C are given similar reference numerals (100 is added for discrimination), and a part of detailed explanation will be omitted.

As shown in FIG. 5A to FIG. 5C, the coarsely divided area F given to the HOE 124 is a pattern defined parallel to the dividing line 124R. The coarsely divided area F is composed of the finely divided areas FA and FB consisting of belt-like slender areas arranged at a predetermined interval, and divided into two areas FA and FB taking the dividing line 124R as a boundary.

The coarsely divided area T given to the HOE 124 is a pattern defined by areas except the coarsely divided areas C and F. The coarsely divided area T is divided into four areas TA, TB, TC and TD taking the division lines 124T and 124R as a boundary.

Among the coarsely divided areas, the area F is used to generate a focus error signal FE, the area T is used to generate a track error signal TE (DPD)/(PP), and the area C is used to generate a track error correction signal TE (CPP) to eliminate an influence of offset in the system including the influence of the offset of the object lens 25.

Namely, in the HOE 124 shown in FIG. 5A to FIG. 5C, the shape of the coarsely divided area C in the HOE 24 explained in FIGS. 2A, 2B and FIGS. 4A to 4C is defined substantially parallel to the dividing line 124T. Therefore, the pattern of the light-receiving cell of the photodetector 26 shown in FIG. 5C can be substantially the same as that shown in FIG. 4C. By defining the shape of the coarsely divided area C as shown in FIG. 5A, a manufacturing error of a grating (hologram pattern) of the coarsely divided area C can be decreased, compared with the examples shown in FIGS. 2A, 2B and FIGS. 4A to 4C.

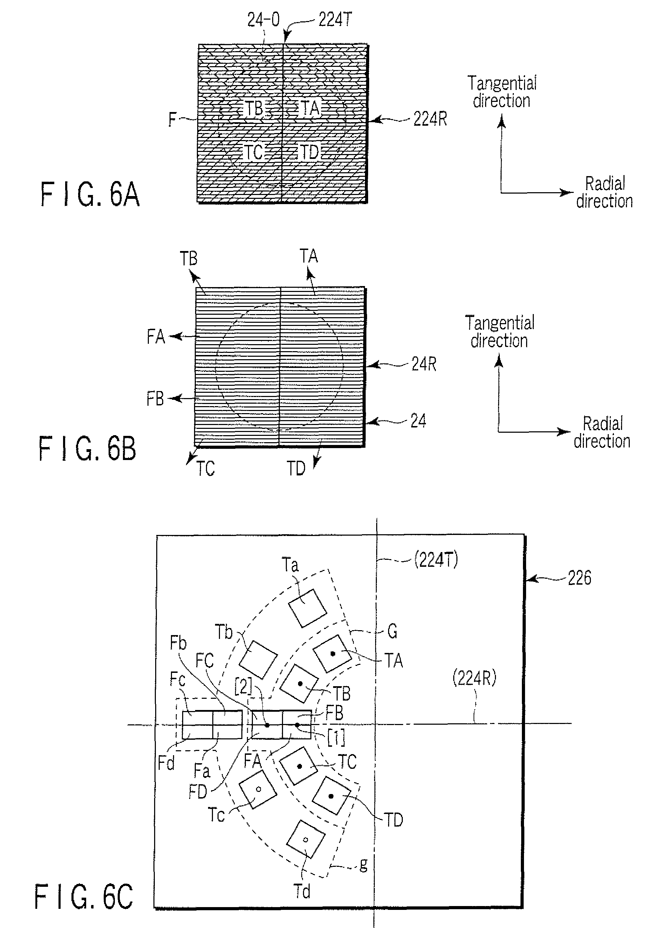

FIG. 6A to FIG. 6C show another embodiment of the areas divided by the HOE and the light-receiving areas (light-receiving cells) of the photodetector explained in FIGS. 2A, 2B, FIGS. 4A to 4C and FIGS. 5A to 5C. The similar components as those of the embodiment explained in FIGS. 2A, 2B, FIGS. 4A to 4C and FIGS. 5A to 5C are given similar reference numerals (200 is added for discrimination), and a part of detailed explanation will be omitted.

As shown in FIG. 6A to FIG. 6C, the coarsely divided area F given to the HOE 224 is a pattern defined parallel to the dividing line 224R. The coarsely divided area F is composed of the finely divided areas FA and FB consisting of belt-like slender areas arranged at a predetermined interval, and divided into two areas FA and FB taking the dividing line 224R as a boundary.

The coarsely divided area T given to the HOE 224 is a pattern defined by areas except the coarsely divided areas C and F. The coarsely divided area T is divided into four areas TA, TB, TC and TD taking the division lines 224T and 224R as a boundary.

Among the coarsely divided areas, the area F is used to generate a focus error signal FE, and the area T is used to generate a track error signal TE (DPD)/(PP).

In the photodetector 226 (200 is added for discrimination), an optical spot from the coarsely divided area C is not used for generating a signal, and omitted.

Namely, in the HOE 224 shown in FIG. 6A to FIG. 6C, the coarsely divided area C in the HOE 24 (124) explained in FIGS. 2A, 2B, FIGS. 4A to 4C and FIGS. 5A to 5C is eliminated, and useful to increase the gain of a track error signal when it is unnecessary to consider reproduction of a signal from an optical disc with different track pitch Tp. Further, the number of the light-receiving cells of the photodetector 226 can be decreased, and the C/N (signal-to-noise ratio (S/N)) is improved.

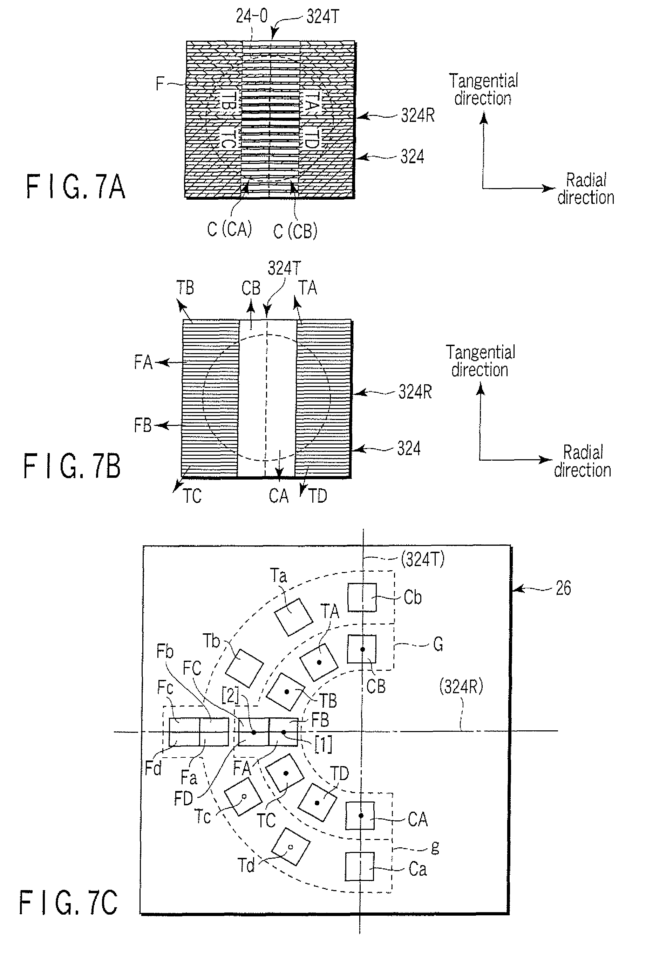

FIG. 7A to FIG. 7C show another embodiment of the areas divided by the HOE and the light-receiving areas (light-receiving cells) of the photodetector explained in FIGS. 2A, 2B, FIGS. 4A to 4C and FIGS. 5A to 5C. The similar components as those of the embodiment explained in FIGS. 2A, 2B, FIGS. 4A to 4C and FIGS. 5A to 5C are given similar reference numerals (300 is added for discrimination), and a part of detailed explanation will be omitted.

As shown in FIG. 7A to FIG. 7C, the coarsely divided area F given to the HOE 324 is a pattern defined parallel to the dividing line 324R. The coarsely divided area F is composed of the finely divided areas FA and FB consisting of belt-like slender areas arranged at a predetermined interval, and divided into two areas FA and FB taking the dividing line 324R as a boundary.

The coarsely divided area T given to the HOE 324 is a pattern defined by areas except the coarsely divided areas C and F. The coarsely divided area T is divided into four areas TA, TB, TC and TD taking the division lines 324T and 324R as a boundary.

Among the coarsely divided areas, the area F is used to generate a focus error signal FE, the area T is used to generate a track error signal TE (DPD)/(PP), and the area C is used to generate a track error correction signal TE (CPP) to eliminate an influence of offset in the system including the influence of the offset of the object lens 25.

Namely, in the HOE 324 shown in FIG. 7A to FIG. 7C, the shape of the coarsely divided area C in the HOE 24 (124) explained in FIGS. 2A, 2B, FIGS. 4A to 4C and FIGS. 5A to 5C is defined substantially parallel to the dividing line 324T and the largeness along the dividing line 324T is increased. Therefore, the pattern of the light-receiving cell of the photodetector 726 shown in FIG. 7C can be substantially the same as that shown in FIG. 4C.

By defining the shape of the coarsely divided area C as shown in FIG. 7A, it is easy to apply to a system (optical head unit) in which the largeness of lens shift given to the object lens 25 (refer to FIG. 1) is large.

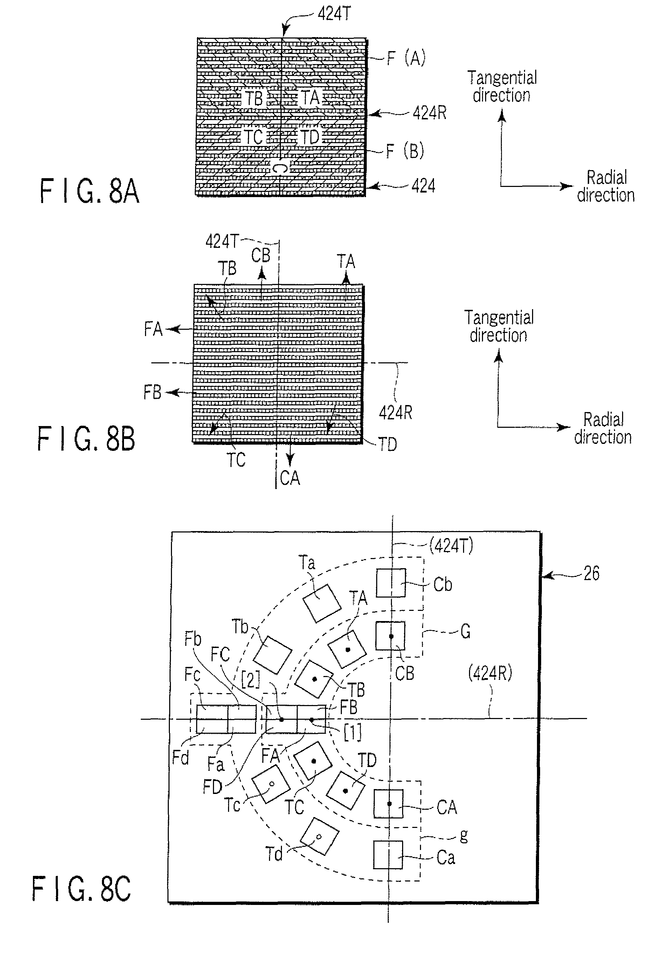

FIG. 8A to FIG. 8C show another embodiment of the areas divided by the HOE and the light-receiving areas (light-receiving cells) of the photodetector explained in FIGS. 7A to 7C. The similar components as those of the embodiment explained in FIGS. 2A, 2B, FIGS. 4A to 4C, FIGS. 5A to 5C and FIGS. 7A to 7C are given similar reference numerals (400 is added for discrimination), and a part of detailed explanation will be omitted.

As shown in FIG. 8A to FIG. 8C, the coarsely divided area F given to the HOE 424 is a pattern defined parallel to the dividing line 424R. The coarsely divided area F is composed of the finely divided areas FA and FB consisting of belt-like slender areas arranged at a predetermined interval, and divided into two areas FA and FB taking the dividing line 424R as a boundary.

The coarsely divided area T given to the HOE 424 is a pattern defined by areas except the coarsely divided areas C and F. The coarsely divided area T is divided into four areas TA, TB, TC and TD taking the division lines 424T and 424R as a boundary.

Among the coarsely divided areas, the area F is used to generate a focus error signal FE, the area T is used to generate a track error signal TE (DPD)/(PP), and the area C is used to generate a track error correction signal TE (CPP) to eliminate an influence of offset in the system including the influence of the offset of the object lens 25.

Namely, in the HOE 424 shown in FIG. 8A to FIG. 8C, the shape of the coarsely divided area C in the HOE 24 (124) explained in FIG. 7A to FIG. 7C is defined substantially parallel to the dividing line 424T and the arrangement along the dividing line 424T is defined to have CA and CB alternately (also called checkered or cross-stitched). Therefore, the pattern of the light-receiving cell of the photodetector 726 shown in FIG. 7C can be substantially the same as that shown in FIG. 4C.

By defining the shape of the coarsely divided area C as shown in FIG. 8A (alternate), it is easy to apply to a system (optical head unit) having a large lens shift.

As explained hereinbefore, according to the invention, a diffraction pattern of a diffraction element or hologram polarization element to guide optional number of reflected laser beams divided into a predetermined number is suitably combined as one body in a photodetector, and an optical head unit is easily designed to obtain a focus error signal, a track error signal, a correction track error signal (in a system with a lens shift), and a reproducing signal (RF) from a laser beam reflected on an optical disc.

Particularly, when reproducing a signal from various optical discs with different pitches of a track or record mark line peculiar to each optical disc, it is possible to provide an optical head unit difficult to be influenced by pitches of a track or a record mark line.

Namely, it is unnecessary to completely divide the area of a reflected light from a recording medium (optical disc) for detection of FE (focus error)/TE (track error), and the design flexibility of an optical head unit is increased. An optical head unit is easily applicable to multiple recording media, and 3-wave compatible optical head unit is easily configured.

According to the invention, a diffraction pattern of a diffraction element or hologram polarization element to guide optional number of reflected laser beams divided into a predetermined number is suitably combined as one body in a photodetector, and an optical head unit is provided to obtain a focus error signal, a track error signal, a correction track error signal (in a system with a lens shift), and a reproducing signal (RF) from a laser beam reflected on an optical disc.

By using the optical head unit, a reproducing signal is stabilized and the reliability of an optical disc unit is increased.

**Claims**

1. An optical head unit (11) **characterized by** comprising:

   a diffraction element (24) which has a first diffraction area given belt-like or comb-like patterns or a predetermined arrangement pattern to diffract light in a first direction group, and a second diffraction area given belt-like or comb-like patterns or a predetermined arrangement pattern to diffract light in a second direction group different from the first direction group, each of the first and second diffraction areas including finely divided areas to diffract the light in a predetermined direction within its direction group; and
   a photodetector (26) which receives the light diffracted by the finely divided areas of each of the first and second diffraction areas of the diffraction element, and outputs a signal corresponding to the intensity of the light

2. An optical head unit (11) **characterized by** comprising:

an object lens (25) which captures light reflected on the recording surface of a recording medium;

an optical diffraction element (24) which has a first area composed of areas to diffract the light captured by the object lens in a first predetermined direction, a second area provided independently of the first area and composed of areas to diffract the light captured by the object lens in a second predetermined direction different from the first predetermined direction;

a first photodetector (26) which detects a diffracted light diffracted by at least one of the areas of the first area of the optical diffraction element, and generates an output signal corresponding to the intensity of the light; and

a second photodetector (26) which detects a diffracted light diffracted by at least one of the areas of the second area of the optical diffraction element, and generates an output signal corresponding to the intensity of the light.

3. The optical head unit (11) according to claim 2, **characterized in that** the first photodetector includes light-receiving parts given a predetermined arrangement,

the second photodetector includes light-receiving parts given a predetermined arrangement,

the first area of the optical diffraction element includes a first finely divided area to diffract the light toward each of the light-receiving parts of the first photodetector,

the second area of the optical diffraction element includes a second finely divided area to diffract the light toward each of the light-receiving parts of the second photodetector, and

the optical diffraction element includes a part where the first area and second area are adjoined.

4. The optical head unit (11) according to claim 2, **characterized in that** the first area of the optical diffraction element includes a first finely divided area shaped like a belt or comb, and the second area of the optical diffraction element includes a second finely divided area shaped like a belt or comb.

5. The optical head unit (11) according to claim 3, **characterized in that** the first finely divided area of the first area of the optical diffraction element is shaped like a belt or comb, and the second finely divided area of the second area of the optical diffraction element is shaped like a belt or comb.

6. An optical disc apparatus (1) **characterized by** comprising:

an optical head unit (11) having a diffraction element (24) which has a first diffraction area given belt-like or comb-like patterns or a predetermined arrangement pattern to diffract light in a first direction group, and a second diffraction area given belt-like or comb-like patterns or a predetermined arrangement pattern to diffract light in a second direction group different from the first direction group, each of the first and second diffraction areas including finely divided areas to diffract the light in a predetermined direction within its direction group; and a photodetector (26) which receives the light diffracted by the finely divided areas of each of the first and second diffraction areas of the diffraction element, and outputs a signal corresponding to the intensity of the light;

a signal output unit (5) which outputs a signal to control a distance from the object lens to a recording medium, and a relative position of light condensed on a recording medium by the object lens in a radial direction of the recording medium, based on the output of the photodetector; and

an information reproducing unit (3) which obtains a reproducing output capable of reproducing information recorded in a recording medium, based on the output of the photodetector.

7. An optical disc apparatus (1) **characterized by** comprising:

an object lens (25) which captures light reflected on the recording surface of a recording medium;

an optical diffraction element (24) which has a first area composed of areas to diffract the light captured by the object lens in a first predetermined direction, a second area provided independently of the first area and composed of areas to diffract the light captured by the object lens in a second predetermined direction different from the first predetermined direction;

a first photodetector (26) which detects a diffracted light diffracted by at least one of the areas of the first area of the optical diffraction element, and generates an output signal corresponding to the intensity of the light;

a second photodetector (26) which detects a diffracted light diffracted by at least one of the areas of the second area of the optical diffraction element, and generates an output signal corresponding to the intensity of the light;

a signal output unit (5) which outputs a signal to control a distance from the object lens to a recording medium, and a relative position of light condensed on a recording medium by the object lens in a radial direction of the recording medium, based on the outputs of the first and second photodetectors; and

an information reproducing unit (3) which obtains a reproducing output capable of reproducing information recorded in a recording medium, by using at least one of the outputs of the first and second photodetectors.

Tangential direction

Radial direction

T

D

L,R

25 (TC) (FC)

24

L,R

22

R (Rf,Rt,Rc)

23

26 TE,FE,RF

L

21

Lens driving circuit — 5

Buffer memory — 4

RF

TC,FC

Signal processor — 2

Controller — 3

Laser driving circuit — 6

1

11

F I G. 1

FIG. 2A

Tangential
direction

Radial
direction

# F I G. 2B

Diffracted light from a disc
having a track with a large Tp

Diffracted light from a disc
having a track with a large Tp

24-0

Diffracted light from
a disc having a track
with a narrow Tp

Diffracted light from
a disc having a track
with a narrow Tp

# F I G. 3

FIG. 4A

FIG. 4B

FIG. 4C

F I G. 5A

Tangential direction

Radial direction

F I G. 5B

Tangential direction

Radial direction

F I G. 5C

F I G. 6A

F I G. 6B

F I G. 6C

F I G. 7A

F I G. 7B

F I G. 7C

FIG. 8A

424T

F (A)

TB · TA

424R

TC · TD

F (B)

424

Tangential
direction

Radial
direction

FIG. 8B

424T

CB

TB

TA

FA

FB

424R

TC

TD

CA

Tangential
direction

Radial
direction

FIG. 8C

(424T)

Ta

TA

Cb

Tb

G

Fb

FC

CB

Fc

[2]

TB

FB

[1]

Fd

Fa

FA

FD

TD

Tc

TC

CA

Td

Ca

g

26

(424R)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002100063 A